# EUROPÄISCHE PATENTSCHRIFT

(11) **EP 1 687 546 B1**
(45) Veröffentlichungstag und Bekanntmachung des Hinweises auf die Patenterteilung: **02.04.2008**
(21) Anmeldenummer: 04818809.8
(22) Anmeldetag: 19.11.2004
(51) Int. Cl.: B60K 23/08

(54) **DREHMOMENTEN BERTRAGUNGSEINRICHTUNG**
TORQUE TRANSFER DEVICE
DISPOSITIF DE TRANSFERT DE COUPLE

(30) Priorität: 24.11.2003 DE 10355097
(43) Veröffentlichungstag der Anmeldung: 09.08.2006
(73) Patentinhaber: Volkswagen AG, 38436 Wolfsburg (DE)
(72) Erfinder: PICHMANN, Volker, 38102 Braunschweig (DE)
(74) Vertreter: Schneider, Peter Christian
(86) Internationale Anmeldenummer: PCT/EP2004/013182
(87) Internationale Veröffentlichungsnummer: WO 2005/050049

(56) Entgegenhaltungen:
- DE-A1- 10 255 153
- DE-A1- 19 711 719

## Beschreibung

Die Erfindung betrifft eine Drehmomentenübertragungseinrichtung in einem Kraftfahrzeug zur variablen Übertragung eines Drehmoments von einer ersten, einem ersten Radpaar zugeordneten Welle auf eine zweite, einem zweiten Radpaar zugeordneten Welle, umfassend eine Kupplungseinheit zur variablen, drehmomentübertragenden Kopplung der ersten und der zweiten Welle, wobei die Kupplungseinheit wenigstens ein erstes, mit der ersten Welle rotationsübertragend verbundenes Kupplungselement und wenigstens ein zweites, mit der zweiten Welle rotationsübertragend verbundenes Kupplungselement, die miteinander in drehmomentübertragender Wechselwirkung stehen oder in eine solche bringbar sind, aufweist, steuerbare Stellmittel zur Einstellung der Stärke der Wechselwirkung zwischen den Kupplungselementen durch Einstellung einer relativen Position und/oder einer mechanischen Anpresskraft der Kupplungselemente und Steuermittel zur Ansteuerung der Stellmittel, wobei die Steuermittel eine Datenverarbeitungseinheit enthalten, die geeignet ist, anhand einer Mehrzahl von Eingangssignalen nach vorgegebenen Regeln ein erstes Steuersignal zu berechnen und zur Ansteuerung der Stellmittel auszugeben.

Eine derartige Einrichtung ist beispielsweise bekannt aus der DE 197 11 719 A1. Solche Drehmomentübertragungseinrichtungen werden vielfach in Kraftfahrzeugen mit Vierradantrieb verwendet. Bei diesen wird ein erstes Radpaar, in der Regel die Vorderräder, primär von einem Motor angetrieben. Bekannt sind auch Systeme, bei denen vorrangig die Hinterräder angetrieben werden, sowie gleichwertige sogenannte Hang-on-Allradlösungen. Das Antriebsdrehmoment wird, beispielsweise mittels eines vorderen Differenzialgetriebes, auch auf die erste Welle übertragen. Diese ist mit einem ersten Kupplungselement, z.B. einem Satz Kupplungsscheiben oder -lamellen, verbunden. Die Kupplungseinheit dient der steuerbaren Wechselwirkung zwischen dem ersten Kupplungselement und einem zweiten Kupplungselement, beispielsweise einem zweiten Satz Kupplungsscheiben oder -lamellen, welches mit dem ersten Kupplungselement beispielsweise durch Änderung der relativen Position oder der wechselseitigen Anpresskraft in Wechselwirkung gebracht bzw. in ihrer Wechselwirkungsstärke verändert werden können. Grundsätzlich ist hier jede Art Kupplung einsetzbar, beispielsweise mechanische, hydraulische oder hydrodynamische Kupplungen. Mit dem zweiten Kupplungselement steht eine zweite Welle in rotationsübertragender Verbindung, welche ihrerseits, beispielsweise über ein hinteres Differenzialgetriebe, mit dem zweiten Radpaar des Kraftfahrzeugs, in der Regel den Hinterrädern, in Verbindung steht. Je nach Stärke der Wechselwirkung zwischen den Kupplungselementen in der Kupplungseinheit wird ein größeres oder kleineres Drehmoment auf das zweite Radpaar übertragen. Es ist erwünscht, dass das Ausmaß der Drehmomentübertragung von der aktuellen Fahrsituation abhängig gemacht wird. Je nach Fahrsituation wird das Drehmoment variiert, z.B. beim Beschleunigen maximiert, wobei hohe Traktion erreicht wird, und beim Rangieren minimiert, um ein Verspannen des Antriebsstranges zu vermeiden.

Um den vielfältigen möglichen Fahrsituationen gerecht zu werden, ist eine komplexe Ansteuerung der Wechselwirkung zwischen den Kupplungselementen der Kupplungseinheit erforderlich. Es ist bekannt, hierzu steuerbare Stellmittel vorzusehen. In der zitierten Druckschrift wird beispielsweise eine hydraulische Druckkolbeneinrichtung offenbart, mit der die Relativkraft zwischen zwei Sätzen von Kupplungsscheiben variiert werden kann. Zur Ansteuerung der hydraulischen Druckkolbenvorrichtung ist ein elektrisch steuerbares Hydraulikventil vorgesehen. Die Anpassung an die jeweilige Fahrsituation wird erreicht, indem die Ausgangssignale einer Vielzahl von einzelnen Sensoren, beispielsweise Fahrzeuggeschwindigkeitssensoren, einzelne Radgeschwindigkeitssensoren, Längs- und Querbeschleunigungssensoren, Lenkwinkelsensoren etc., als Eingangssignale einer Datenverarbeitungsvorrichtung verwendet werden. Der Signalfluss kann beispielsweise über den Fahrzeuginternen CAN-Bus erfolgen. Die Datenverarbeitungseinrichtung, z.B. ein spezielles Steuergerät, ist programmtechnisch so eingerichtet, dass aus der Vielzahl der Eingangssignale nach bestimmten Entscheidungsregeln ein Steuersignal erzeugt wird, welches zur Ansteuerung des Hydraulikventils verwendet wird. Im Detail unterschiedlich, vom Grundprinzip jedoch gleichwirkend sind die in DE 36 26 024 A1 und DE 34 27 725 C2 offenbarten Vorrichtungen.

Mit dem erläuterten Steuerprinzip ist es gelungen, die Drehmomentübertragung sehr gut an unterschiedliche Fahrsituationen anzupassen.

Diese sehr gute Anpassung an unterschiedlichste Bedingungen erfordert jedoch das Erfassen einer Vielzahl von Signalen und deren rechenintensive Verarbeitung. Beides ist vergleichsweise zeitintensiv. Insbesondere wenn Signale, wie beispielsweise die Radgeschwindigkeit, nicht unmittelbar erfasst werden, sondern als Nebenprodukt anderer Berechnungsprozesse in separaten Steuergeräten, wie etwa einem ABS-Steuergerät, anfallen, hinkt das Steuersignal zeitlich verzögert der Änderung der tatsächlichen Fahrsituation hinterher. Diese Verzögerung ist jedoch in der überwiegenden Anzahl der Fälle weitgehend unerheblich. Bei sehr plötzlichen Änderungen der Fahrsituation jedoch, beispielsweise wenn ein einzelnes Rad plötzlich auf eine Eisplatte auffährt oder sich der Schlupf eines oder mehrerer Räder aus anderen Gründen sehr plötzlich ändert, wäre eine noch zeitnähere Anpassung der Drehmomentverteilung wünschenswert.

Es ist die Aufgabe der vorliegenden Erfindung, eine gattungsgemäße Drehmomentübertragungseinrichtung derart weiterzubilden, dass ohne Komplexitätsverlust eine schnellere Anpassung der Drehmomentverteilung in kritischen Fahrsituationen ermöglicht wird.

Diese Aufgabe wird in Verbindung mit den Merkmalen des Oberbegriffs von Anspruch 1 dadurch gelöst, dass dem ersten Steuersignal ein zweites Steuersignal überlagert ist, welches ein Maß für die Differenz der Rotationsgeschwindigkeiten der ersten und der zweiten Welle ist, wobei eine Änderung des zweiten Steuersignals aufgrund einer durch eine Fahrsituationsänderung verursachte Änderung dieser Differenz einer durch dieselbe Fahrsituationsänderung verursachten Änderung des ersten Steuersignals zeitlich vorauseilt.

Es ist die Grundidee der vorliegenden Erfindung, die Ansteuerung der Stellmittel durch eine Superposition zweier Steuersignale unterschiedlicher Herkunft zu bewerkstelligen. Das erste Steuersignal kann dabei das bekannte, komplexe Steuersignal sein, welches geeignet ist, die Drehmomentverteilung in allen sich "langsam" anbahnenden Fahrsituationen zu optimieren. Das zweite Steuersignal wird dagegen aus wenigen Eingangsgrößen, insbesondere lediglich der Differenzgeschwindigkeit der ersten und der zweiten Welle, erzeugt und ist daher deutlich schneller verfügbar als das komplexe Signal. Die Differenzgeschwindigkeit zwischen erster und zweiter Welle ist insofern für die Erzeugung des zweiten Steuersignals besonders geeignet, da sie stets ein Anzeichen dafür ist, dass wenigstens ein Rad einen größeren Schlupf zeigt als andere Räder. Auch ist die Erfassung dieser Differenzgeschwindigkeit, wie weiter unten erläutert werden soll, besonders einfach und daher schnell. Durch die vorliegende Erfindung wird daher eine unmittelbare, wenn auch wenig differenzierte Anpassung der Drehmomentenverteilung bei plötzlich auftretenden Fahrsituationsänderungen ermöglicht. Die sich zeitverzögert einstellende, entsprechende Änderung des komplexen Signals äußert sich dann in einer Feinabstimmung der Drehmomentverteilung. Grundsätzlich ist es zwar möglich, die für die Erzeugung des zweiten Steuersignals erforderliche Differenzgeschwindigkeit zwischen der ersten und der zweiten Welle direkt zu erfassen. Dies würde jedoch ein eigens hierfür vorgesehenes Differenzgetriebe erfordern. Günstiger ist es daher wie in einer bevorzugten Ausführungsform der Erfindung vorgesehen, die Rotationsgeschwindigkeiten der ersten und der zweiten Welle durch jeweils wenigstens einen eigenen Sensor zu erfassen und einen Komparator vorzusehen, der als Eingangssignale Ausgangssignale dieser Sensoren erfasst und als Komparator-Ausgangssignal das zweite Steuersignal liefert. Alternativ ist es auch möglich einen einzelnen Sensor zu verwenden, der mittels einer intelligenten Auswertelogik die Differenzgeschwindigkeit direkt erfasst. Die genannten Komponenten können als elektrische oder elektronische Standard-Bauteile implementiert sein, was kostengünstig ist und Wartungsfreiheit garantiert.

Bei der konkreten Umsetzung können unterschiedliche Strategien verfolgt werden. Bei einer günstigen Ausführungsform ist etwa vorgesehen, dass die Sensoren jeweils ein analoges, elektrisches Signal liefern, welches ein Maß für die Rotationsgeschwindigkeit der jeweiligen Welle ist. Bei einer solchen Ausführungsform der Sensoren ist es günstig, den Komparator als einen analogen Differenzverstärker auszuführen. Auf diese Weise wird der Zeitverzug, der zwischen dem Eintreten einer neuen Fahrsituation und der Anpassung des zweiten Steuersignals liegt, minimiert. Insbesondere sind keine zeitaufwendigen Berechnungen erforderlich. Auch die Anzahl der Wandlungsvorgänge im Signalweg wird minimiert. Alternativ kann der Komparator jedoch auch so gestaltet sein, dass er eine digitale Datenverarbeitungseinheit umfasst. Diese Variante ist insbesondere günstig, wenn die Sensoren so gestaltet sind, dass sie ein digitales Signal liefern. Dies ist beispielsweise bei Hall-Sensoren oder Induktivgebern der Fall, die als Ausgangssignal eine elektrische Impulsfolge liefern, wobei die Impulsfrequenz der Rotationsgeschwindigkeit der jeweiligen Welle proportional ist. Derartige Daten könnten von einem digitalen Komparator unmittelbar erfasst und bearbeitet werden, so dass auch hier keine zeitaufwendigen Berechnungen erforderlich sind und das zweite Steuersignal der Fahrsituationsänderung ähnlich schnell folgt wie im rein analogen Fall.

Zur Vereinfachung des Aufbaus und zur Minimierung der Teilezahl ist es günstig, wenn die Sensoren in einem gemeinsamen Gehäuse angeordnet sind. Ein derartiger Doppelsensor kann im Fall einer Kupplungseinheit mit Lamellentrommel unmittelbar benachbart zu dieser angeordnet sein. Günstigerweise kann auch der Komparator in demselben Gehäuse vorgesehen sein.

Wie aus dem Stand der Technik bekannt, ist es besonders günstig, wenn die Stellmittel zur Betätigung der Kupplungseinrichtung als hydraulische Druckkolbenanordnung ausgebildet ist. Gleichwohl sind auch andere Varianten, etwa elektromotorische Stellmittel, denkbar. Auch sind beispielsweise elektrisch angetriebene Scherenhebelsysteme und Kugelrampensysteme als Stellmittel in Drehmomentverteilern bekannt. Der Grundgedanke der Erfindung bleibt davon unberührt. Im jeweiligen Fall kann jedoch die konkrete Verwendung des (Gesamt-) Steuersignals unterschiedlich sein. Im Fall der hydraulischen Druckkolbenanordnung zur Betätigung der Kupplungseinrichtung ist es besonders günstig, ein elektrisch ansteuerbares Hydraulikventil vorzusehen, welches von dem Steuersignal angesteuert wird, um die hydraulische Druckkolbenanordnung zu steuern. Obgleich auch Volumenstromproportionale Hydraulikventile grundsätzlich verwendbar sind, ist bei einer besonders günstigen Ausführungsform der Erfindung vorgesehen, das Hydraulikventil als kraftproportionales Ventil auszugestalten.

Alternativ zur Ansteuerung der Druckkolbenanordnung mittels eines Hydraulikventils kann bei einer anderen Ausführungsform der Erfindung vorgesehen sein, das zweite Steuersignal unmittelbar zur Ansteuerung einer Hydraulikpumpe zu verwenden. In vielen Fällen wird diese Variante jedoch gegenüber der Ventil-Variante eine Zeitverzögerung zeigen, da hierbei der relativ hohe Strom des Pumpenmotors variiert werden muss. Weitere Merkmale und Vorteile der vorliegenden Erfindung ergeben sich aus der nachfolgenden, speziellen Beschreibung sowie den Zeichnungen, in denen
- Figur 1: eine schematische, vereinfachte Darstellung des Antriebsstranges und einiger Signalwege zur Ansteuerung eines Drehmomentverteilers in einem Kraftfahrzeug zeigt,
- Figur 2: eine schematische, vereinfachte Darstellung eines Drehmomentverteilers und seiner Ansteuerung mittels des zweiten Steuersignals darstellt.

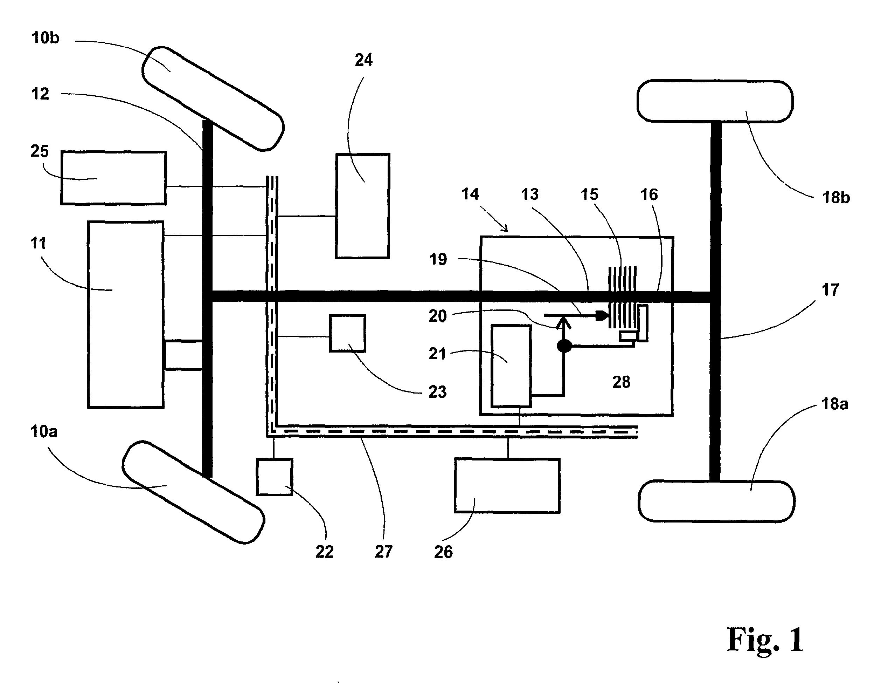

Figur 1 zeigt in schematischer und stark vereinfachter Darstellung den Antriebsstrang und einige Signalwege eines Kraftfahrzeugs mit Vierradantrieb. Ein erstes Radpaar 10a, 10b (Vorderräder) wird direkt von einem Motor 11 angetrieben. Die Rotation der das Radpaar 10a, 10b verbindenden Achse 12 wird mittels eines nicht dargestellten Differenzialgetriebes auf eine erste Welle 13 übertragen, welche die Eingangswelle einer erfindungsgemäßen Drehmomentübertragungseinrichtung 14 darstellt. Mittels einer Kupplungseinheit 15, wird das Drehmoment der Eingangswelle 13 teilweise auf eine Ausgangswelle 16 übertragen. Diese treibt über ein ebenfalls nicht dargestelltes Differenzialgetriebe eine Achse 17 an, welche ein zweites Radpaar 18a, 18b (Hinterräder) verbindet. Je nach Einstellung der Kupplungseinheit 15 wird ein größerer oder ein kleinerer Teil des Drehmoments der Eingangswelle 13 auf die Ausgangswelle 16 übertragen.

Die Betätigung der Kupplungseinheit 15, die im gezeigten Ausführungsbeispiel als Lamellentrommel mit miteinander verschachtelt angeordneten Kupplungsscheiben ausgeführt ist, erfolgt mittels eines hydraulischen Druckkolbens 19, der in Figur 1 lediglich als Pfeil angedeutet ist. Die Ansteuerung des Druckkolbens 19 erfolgt im gezeigten Ausführungsbeispiel über ein hydraulisches Steuerventil 20, welches in Figur 1 ebenfalls lediglich als Pfeil angedeutet ist. Zur Steuerung des Ventils 20 ist, wie im Stand der Technik bekannt, ein dem Drehmomentverteiler 14 zugeordnetes Steuergerät 21 vorgesehen.

Das Steuergerät 21 verwendet eine Vielzahl von Eingangssignalen, die ihm von verschiedenen Sensoren des Kraftfahrzeugs, beispielsweise einem Lenkwinkelsensor 22, einem Bremssensor 23, dem Kombigerät 24, dem Motorsteuerungs-Steuergerät 25, dem ABS-EPS-Steuergerät 26, etc. geliefert werden. In dem gezeigten Ausführungsbeispiel sind die Sensoren/Steuergeräte jeweils mit dem CAN-Bus 27 verbunden, an den auch das Drehmomentverteiler-Steuergerät 21 angeschlossen ist.

Aus diesen Eingangssignalen berechnet das Drehmomentverteiler-Steuergerät nach komplexen Entscheidungsregeln ein komplexes Steuersignal zur Ansteuerung des Steuerventils 20.

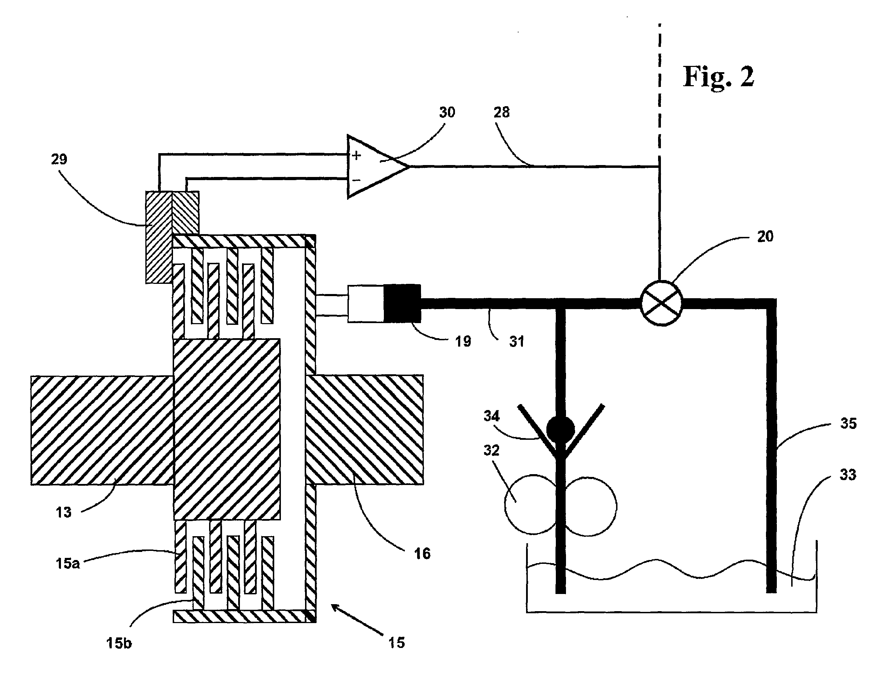

Diesem ersten Regelkreis ist erfindungsgemäß ein zweiter Regelkreis 28 nebengeordnet, der ein zweites Steuersignal erzeugt, welches dem ersten, von dem ersten Regelkreis erzeugten Steuersignal überlagert wird. Das Steuerventil wird daher mittels der Superposition des ersten und zweiten Steuersignals angesteuert. Zur Erläuterung des erfindungsgemäßen zweiten Regelkreises wird auf Figur 2 verwiesen.

Figur 2 zeigt in schematischer, stark vereinfachter Darstellung die Kupplungseinheit 15 und Teile ihrer Ansteuerungsanordnung. Im gezeigten Ausführungsbeispiel ist die Kupplungseinheit 15 als Lamellentrommel ausgeführt, in der miteinander verschachtelt angeordnete Kupplungsscheiben 15a, 15b, die der Eingangswelle 13 bzw. der Ausgangswelle 16 zugeordnet und rotationsübertragend mit diesen verbunden sind, miteinander wechselwirken können. Die Stärke der Wechselwirkung wird im gezeigten Ausführungsbeispiel durch einen hydraulischen Druckkolben 19 bewerkstelligt, der über eine Druckleitung 31 mit einer Pumpe 32 verbunden ist, die aus einem Hydraulikflüssigkeitsreservoir 33 gespeist wird. Im gezeigten Ausführungsbeispiel sind die Druckleitung 31 und die Pumpe 32 in bekannter Weise über ein Rückschlagventil 34 verbunden. Bei anderen Ausführungsformen können alternative Lösungen verwendet werden. Die Druckleitung 31 ist auch über ein elektrisch ansteuerbares Steuerventil 20 mit einer Rückführleitung 35 verbunden, die Hydraulikflüssigkeit in geregelter Weise dem Flüssigkeitsreservoir 33 zurückführen kann. Bei gleichmäßiger Pumpleistung lässt sich der Druck in der Druckleitung 31 und damit die Stärke der Wechselwirkung zwischen den Kupplungsscheiben 15a und 15b durch Variation der Ventilöffnung 20 einstellen.

Wie bereits erläutert, stammt ein Teil des Steuersignals für das Ventil 20 von dem Drehmomentverteiler-Steuergerät 21. Diese Verbindung ist in Figur 2 gestrichelt angedeutet. Erfindungsgemäß ist ein zweiter Regelkreis 28 vorgesehen, der einen Doppel-Geschwindigkeitssensor 29 aufweist, welcher die jeweiligen Geschwindigkeiten der Eingangswelle 13 und der Ausgangswelle 16 misst und ein entsprechendes Signal ausgibt. Im vorliegenden Fall stellen die Ausgangssignale des Doppel-Geschwindigkeitssensors 29 analoge Spannungsniveaus dar, die in definierter Weise ein Maß für die jeweiligen Wellengeschwindigkeiten sind. Diese Signale werden im gezeigten Ausführungsbeispiel einem als Differenzverstärker 30 ausgeführten Komparator zugeführt, welcher ein entsprechendes Differenzsignal erzeugt, das ein Maß für die Differenzgeschwindigkeit zwischen der ersten und der zweiten Welle darstellt. Dieses Komparator-Ausgangssignal wird als zweites Steuersignal dem ersten Steuersignal überlagert und bildet mit diesem zusammen das Gesamt-Steuersignal für das Ventil 20.

Aufgrund der geringen Anzahl an Eingangssignalen und der schnellen, analogen Verarbeitung im analogen Differenzverstärker 30 folgt das zweite Steuersignal einer Änderung der Differenzgeschwindigkeit der Wellen 13 und 16 nahezu ohne Zeitverzögerung. Gleichzeitig ist die Differenzgeschwindigkeit der Wellen 13 und 16 ein unmittelbares Maß für Schlupf wenigstens eines Rades, ohne dass eine genaue Analyse sonstiger Messwerte erforderlich wäre, um diesen Umstand zu erkennen. Bei einer plötzlich eintretenden Änderung der Fahrsituation, beispielsweise wenn ein Rad plötzlich auf haftarmen Untergrund gerät und verstärkten Schlupf zeigt, ändert sich das zweite Steuersignal sofort und leitet durch entsprechende Ansteuerung des Ventils 20 unmittelbar eine kompensierende Änderung der Drehmomentenverteilung ein. Dieselbe Änderung der Fahrsituation wird selbstverständlich auch von dem Drehmomentverteiler-Steuergerät 21 erkannt, das hierzu jedoch eine Vielzahl von Eingangssignalen aufnehmen und diese nach komplexen Entscheidungsregeln berechnen muss. Ein entsprechend angepasstes Steuersignal für das Ventil 20 kann daher lediglich zeitverzögert erzeugt werden. Zu diesem Zeitpunkt wurde jedoch bereits durch den inneren Regelkreis eine geeignete Kompensation eingeleitet. Die Änderung des ersten Steuersignals wirkt sich daher nur noch als Feinabstimmung der Drehmomentenverteilung aus. Aufgrund der vorliegenden Erfindung gelingt es, ohne dass an der Komplexität der Anpassung der Drehmomentenverteilung an jeweilige Fahrsituationen durch das erste Steuersignal etwas verloren ginge, durch das erfindungsgemäße, zweite Steuersignal eine deutliche Verkürzung der Antwortzeit der Drehmomentenverteilung auf plötzlich eintretende Fahrsituationsänderungen zu erreichen.

Die vorliegende Erfindung wurde anhand eines speziellen Ausführungsbeispiels dargestellt. Es sind jedoch im Rahmen der Erfindung eine Vielzahl von Variationen denkbar. Beispielsweise kann die erforderliche Druckvariation in der Druckleitung 31 durch direkte Ansteuerung der Pumpe 32 anstelle des Ventils 20 erfolgen. Auch ist es grundsätzlich möglich, die Kupplungseinheit 15 anders als hydraulisch, z.B. elektromotorisch zu betätigen. Weiter ist die Implementierung der Kupplungseinrichtung nicht auf die gezeigte Lamellentrommel beschränkt. Andere Kupplungsformen, beispielsweise hydrodynamische Kupplungen oder ähnliches sind ebenfalls verwendbar. Weiter ist der zweite Regelkreis 28 nicht auf die in Figur 2 gezeigte, analoge Form beschränkt. Insbesondere bei Sensoren, die eine Impulsfolge als Ausgangssignal erzeugen, kann eine digitale Ermittlung der relevanten Differenzgeschwindigkeit zwischen Eingangswelle 13 und Ausgangswelle 16 ähnlich schnell ablaufen wie bei der dargestellten analogen Form. Die hier erforderliche digitale Datenverarbeitungseinheit kann z.B. in dem Drehmomentverteiler-Steuergerät 21 oder auch separat vorgesehen sein.

## Patentansprüche

1. Drehmomentübertragungseinrichtung in einem Kraftfahrzeug zur variablen Übertragung eines Drehmoments von einer ersten, einem ersten Radpaar (10a, 10b) zugeordneten Welle (13) auf eine zweite, einem zweiten Radpaar (18a, 18b) zugeordneten Welle (16), umfassend:
- eine Kupplungseinheit (15) zur variablen, drehmomentübertragenden Kopplung der ersten und der zweiten Welle (13; 16), wobei die Kupplungseinheit (15) wenigstens ein erstes, mit der ersten Welle (13) rotationsübertragend verbundenes Kupplungselement (15a) und wenigstens ein zweites, mit der zweiten Welle (16) rotationsübertragend verbundenes Kupplungselement (15b), die miteinander in drehmomentübertragender Wechselwirkung stehen oder in eine solche bringbar sind, aufweist;
- steuerbare Stellmittel (19, 20) zur Einstellung der Stärke der Wechselwirkung zwischen den Kupplungselementen (15a, 15b) durch Einstellung einer relativen Position und/oder einer mechanischen Anpresskraft der Kupplungselemente,
- Steuermittel (21) zur Ansteuerung der Stellmittel, wobei die Steuermittel (21) eine Datenverarbeitungseinheit enthalten, die geeignet ist, anhand einer Mehrzahl von Eingangssignalen nach vorgegebenen Regeln ein erstes Steuersignal zu berechnen und zur Ansteuerung der Stellmittel (19, 20) auszugeben,
**dadurch gekennzeichnet,**
**dass** dem ersten Steuersignal ein zweites Steuersignal überlagert ist, welches ein Maß für die Differenz der Rotationsgeschwindigkeiten der ersten und der zweiten Welle (13; 16) ist, wobei eine Änderung des zweiten Steuersignals aufgrund einer durch die Fahrsituation verursachte Änderung dieser Differenz einer durch dieselbe Fahrsituation verursachten Änderung des ersten Steuersignals zeitlich vorauseilt.

2. Einrichtung nach Anspruch 1, **dadurch gekennzeichnet, dass** die Rotationsgeschwindigkeiten der ersten und der zweiten Welle (13; 16) durch jeweils wenigstens einen eigenen Sensor (29) erfassbar sind und dass ein Komparator (30) vorgesehen ist, der als Eingangssignale Ausgangssignale der Sensoren (29) erfasst und als Komparator-Ausgangssignal das zweite Steuersignal liefert.

3. Einrichtung nach Anspruch 2, **dadurch gekennzeichnet, dass** die Sensoren (29) jeweils ein analoges, elektrisches Signal liefern, welches ein Maß für die Rotationsgeschwindigkeit der jeweiligen Welle (13; 16) ist.

4. Einrichtung nach einem der Ansprüche 2 oder 3, **dadurch gekennzeichnet, dass** der Komparator ein analoger Differenzverstärker (30) ist.

5. Einrichtung nach einem der Ansprüche 2 oder 3, **dadurch gekennzeichnet, dass** der Komparator eine digitale Datenverarbeitungseinheit umfasst.

6. Einrichtung nach einem der Ansprüche 2 bis 5, **dadurch gekennzeichnet, dass** wenigstens einer der Sensoren (29) ein Hall-Element oder einen Induktivgeber umfasst.

7. Einrichtung nach einem der Ansprüche 2 bis 6, **dadurch gekennzeichnet, dass** die Sensoren in einem gemeinsamen Gehäuse (29) angeordnet sind.

8. Einrichtung nach einem der Ansprüche 1 bis 7, **dadurch gekennzeichnet, dass** die Stellmittel eine hydraulische Druckkolbenanordnung (19) umfassen.

9. Einrichtung nach Anspruch 8, **dadurch gekennzeichnet, dass** die Steuerung der hydraulischen Druckkolbenanordnung (19) über die Ansteuerung eines elektrisch ansteuerbaren Hydraulikventils (20) erfolgt.

10. Einrichtung nach Anspruch 9, **dadurch gekennzeichnet, dass** das Hydraulikventil ein kraftproportionales Ventil (20) ist.

11. Einrichtung nach Anspruch 8, **dadurch gekennzeichnet, dass** die Steuerung der hydraulischen Druckkolbenanordnung (19) über die Ansteuerung einer elektrisch ansteuerbaren Hydraulikpumpe (32) erfolgt.

## Claims

1. Torque transmission device in a motor vehicle for the variable transmission of a torque from a first shaft (13) which is assigned to a first pair of wheels (10a, 10b) to a second shaft (16) which is assigned to a second pair of wheels (18a, 18b), comprising,
- a clutch unit (15) for the variable, torque-transmitting coupling of the first and second shafts (13; 16), wherein the clutch unit (15) has at least a first clutch element (15a) which is connected in a rotation-transmitting fashion to the first shaft (13), and at least a second clutch element (15b) which is connected in a rotation-transmitting fashion to the second shaft (16), which clutch elements (15a, 15b) are in a torque-transmitting interactive relationship with one another or can be placed in such a relationship;
- controllable actuating means (19, 20) for setting the strength of the interactive relationship between the clutch elements (15a, 15b) by setting a relative position and/or a mechanical pressing force of the clutch elements, and
- control means (21) for actuating the actuator means, wherein the control means (21) can turn a data processing unit which is suitable for calculating a first control signal according to predefined rules by means of a plurality of input signals and for outputting them in order to actuate the actuator means (19, 20),
**characterized in that** a second control signal is superimposed on the first control signal, so that the second control signal is a measure of the difference of the rotational speeds of the first and second shafts (13; 16), wherein a change in the second control signal owing to a change in this difference which is caused by the driving situation leads a change in the first control signal which is caused by the same driving situation.

2. Device according to Claim 1, **characterized in that** the rotational speeds of the first and second shafts (13; 16) can be sensed by in each case at least one separate sensor (29), and **in that** a comparator (30) is provided which senses output signals of the sensors (29) as input signals and supplies the second control signal as a comparator output signal.

3. Device according to Claim 2, **characterized in that** the sensors (29) each supply an analogue electrical signal which is a measure of the rotational speed of the respective shaft (13; 16).

4. Device according to one of Claims 2 or 3, **characterized in that** the comparator is an analogue difference amplifier (30).

5. Device according to one of Claims 2 or 3, **characterized in that** the comparator comprises a digital data processing unit.

6. Device according to one of Claims 2 to 5, **characterized in that** at least one of the sensors (29) comprises a Hall element or an inductive signal transmitter.

7. Device according to one of Claims 2 to 6, **characterized in that** the sensors are arranged in a common housing (29).

8. Device according to one of Claims 1 to 7, **characterized in that** the actuator means comprise an hydraulic pressure piston arrangement (19).

9. Device according to Claim 8, **characterized in that** the hydraulic pressure piston arrangement (19) is controlled by actuating an electrically actuable hydraulic valve (20).

10. Device according to Claim 9, **characterized in that** the hydraulic valve is a force-proportional valve (20).

11. Device according to Claim 8, **characterized in that** the hydraulic pressure piston arrangement (19) is controlled by actuating an electrically actuated hydraulic pump (32).

## Revendications

1. Dispositif de transmission de couple dans un véhicule automobile pour la transmission variable d'un couple d'un premier arbre (13) affecté à une première paire de roues (10a, 10b) à un deuxième arbre (16) affecté à une deuxième paire de roues (18a, 18b), comprenant :
- une unité d'accouplement (15) destinée à l'accouplement variable à transmission de couple du premier et du deuxième arbres (13, 16), l'unité d'accouplement (15) présentant au moins un premier élément d'accouplement (15a) relié avec transmission de la rotation avec le premier arbre (13) et au moins un deuxième élément d'accouplement (15b) relié avec transmission de la rotation avec le deuxième arbre (16), lesquels sont mutuellement en interaction de transmission de couple ou peuvent y être amenés ;
- des moyens de réglage (19, 20) commandables pour régler le niveau d'interaction entre les éléments d'accouplement (15a, 15b) en réglant une position relative et/ou une force de compression mécanique des éléments d'accouplement ;
- des moyens de commande (21) pour commander les moyens de réglage, les moyens de commande (21) contenant une unité de traitement de données qui est conçue pour calculer, au moyen d'une pluralité de signaux d'entrée, un premier signal de commande d'après des règles prédéfinies et pour le délivrer en vue de commander les moyens de réglage (19, 20),
**caractérisé en ce**
**qu'**un deuxième signal de commande est superposé au premier signal de commande, lequel est une indication de la différence entre les vitesses de rotation du premier et du deuxième arbres (13, 16), une modification du deuxième signal de commande en raison d'une modification de cette différence provoquée par la situation de conduite précédant dans le temps une modification du premier signal de commande provoquée par la même situation de conduite.

2. Dispositif selon la revendication 1, **caractérisé en ce que** les vitesses de rotation du premier et du deuxième arbres (13, 16) peuvent respectivement être détectées par au moins un capteur (29) propre et qu'il est prévu un comparateur (30) qui reçoit comme signaux d'entrée les signaux de sortie des capteurs (29) et délivre le deuxième signal de commande en tant que signal de sortie de comparateur.

3. Dispositif selon la revendication 2, **caractérisé en ce que** les capteurs (29) délivrent respectivement un signal électrique analogique qui est une indication de la vitesse de rotation de l'arbre (13, 16) correspondant.

4. Dispositif selon l'une des revendications 2 ou 3, **caractérisé en ce que** le comparateur est un amplificateur différentiel analogique (30).

5. Dispositif selon l'une des revendications 2 ou 3, **caractérisé en ce que** le comparateur comprend une unité numérique de traitement de données.

6. Dispositif selon l'une des revendications 2 à 5, **caractérisé en ce qu'**au moins l'un des capteurs (29) comprend un élément à effet Hall ou un capteur inductif.

7. Dispositif selon l'une des revendications 2 à 6, **caractérisé en ce que** les capteurs sont disposés dans un boîtier (29) commun.

8. Dispositif selon l'une des revendications 1 à 7, **caractérisé en ce que** les moyens de réglage comprennent un arrangement hydraulique à piston de compression (19).

9. Dispositif selon la revendication 8, **caractérisé en ce que** la commande de l'arrangement hydraulique à piston de compression (19) s'effectue en commandant une vanne hydraulique (20) à commande électrique.

10. Dispositif selon la revendication 9, **caractérisé en ce que** la vanne hydraulique est une vanne à force proportionnelle (20).

11. Dispositif selon la revendication 8, **caractérisé en ce que** la commande de l'arrangement hydraulique à piston de compression (19) s'effectue en commandant une pompe hydraulique (32) à commande électrique.
